# EUROPEAN PATENT APPLICATION

(11) **EP 3 034 383 A1**
(43) Date of publication of application: **22.06.2016**
(21) Application number: 15199866.3
(22) Date of filing: 14.12.2015
(51) Int. Cl.: B62J 6/18, B62J 15/00

(54) **MEANS FOR FIXING AN ELECTRIC CABLE ON A MUDGUARD OF A BICYCLE, MOTORCYCLE AND THE LIKE**

(30) Priority: 17.12.2014 IT VI20140316
(71) Applicant: RPZ S.R.L., 31010 Paderno del Grappa (Treviso) (IT)
(72) Inventor: Passuello, Ivan, 31020 Treviso (IT)
(74) Representative: Bettello, Pietro

(57) **Abstract**

A means for fixing an electric cable (20) on a mudguard (10) of a bicycle, motorcycle and the like, comprising a monoblock element (1), in the form of a simple-coupling clip, consisting of a jaw (2), suitable to lock without distinction on one of the two lateral edges of the mudguard (10) wherein said jaw (2) proceeds with a band (3), shaped so as to provide containing means of the electric cable (20) and that takes a shape corresponding to that of the outer surface of the mudguard (10).

## Description

The present finding concerns a means for fixing an electric cable on a mudguard of a bicycle, motorcycle and the like, according to the general part of claim 1.

As known, the locking of the cables used in the cabling of electrical systems of bicycles and motorcycles has functional limitations, in particular, at the mudguards.

In the current state of the art more or less complex devices are known, which take care of holding and possibly also covering the electric cables on the mudguard, so that they are not exposed to accidental breaking.

A first embodiment of such devices foresees that the cable be positioned under the mudguard, kept locked longitudinally against the wall facing towards the wheel

As an example, we quote patent documents EP2060478, DE202007000278, FR1506469, DE926955, EP0691262 and EP1785342.

A second embodiment of such devices foresees that the cable be positioned above the mudguard, held longitudinally against the outer wall and possibly covered, again longitudinally.

As an example, we quote patent document DE202007007576, in which it is foreseen for the mudguard to be provided with a longitudinal throat closed by a plate, so as to define a longitudinal empty space in which the cable is housed.

Again as an example, we quote patent document EP2703266, in which the means for fixing the cable are configured to clamp both side edges of the mudguard simultaneously.

In practice, both of these two systems have substantial drawbacks.

Specifically, the first system is disadvantageous, since it is necessary to provide a suitably shaped mudguard and the second system is equally disadvantageous since, as the fixing means have to be anchored on the two edges, it is necessarily conditioned by the transverse dimensions and by the shape of the mudguard itself; basically, both of the systems require special mudguards and consequently the different types of devices for fixing the cable on the mudguard have substantial difficulties of commercialisation. The purpose of the finding is to make a means for fixing the electric cable on the mudguard of a bicycle, motorcycle and the like that does not have the drawbacks of similar known products.

Specifically, the purpose of the finding is to make a fixing means that can be used with any configuration of the mudguard.

A further purpose of the finding is to make a fixing means that is quick and easy to apply, as well as low-cost.

Such purposes are accomplished by making a monoblock fixing means, substantially in the form of a simple-coupling clip, consisting of a jaw that locks, without distinction, on one of the two edges of the mudguard and from which extends a band, shaped so as to make an eyelet, which contains the through cable; said band extends beyond the eyelet, matching the shape of the outer surface of the mudguard.

Operatively, the band is made with an elastically deformable structure so that, when the fixing means is applied on the edge of the mudguard, said band is in the forcibly deformed condition, so that the elastic contrast force holds it in contact with the outer surface of the aforementioned mudguard and therefore the eyelet that contains the through cable also locks.

Further characteristics and advantages of the finding will be highlighted through the description of a possible embodiment thereof, given as a nonlimiting example, with the help of the attached tables of drawings, where:

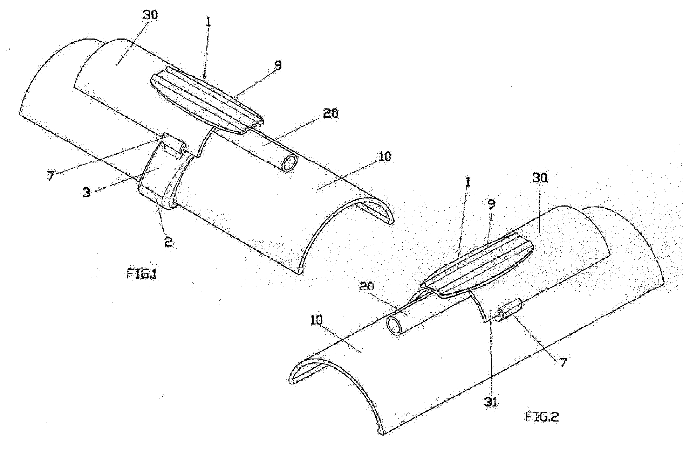

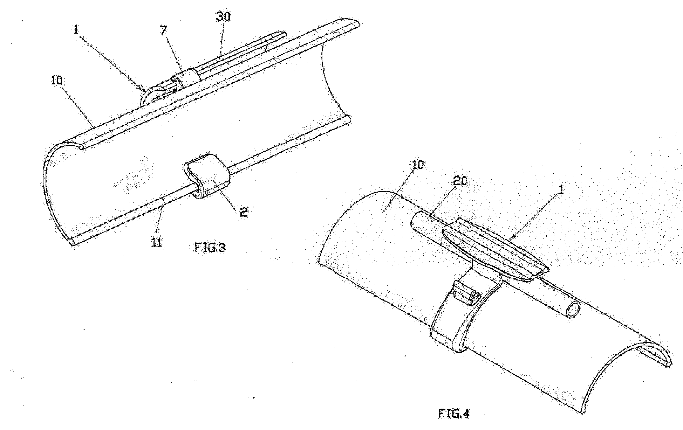

- figs. 1, 2, 3 (table I - II) represent three perspective views of the finding in operative step;
- fig. 4 represents a perspective view of the finding in operative step, without the cover of the cable;

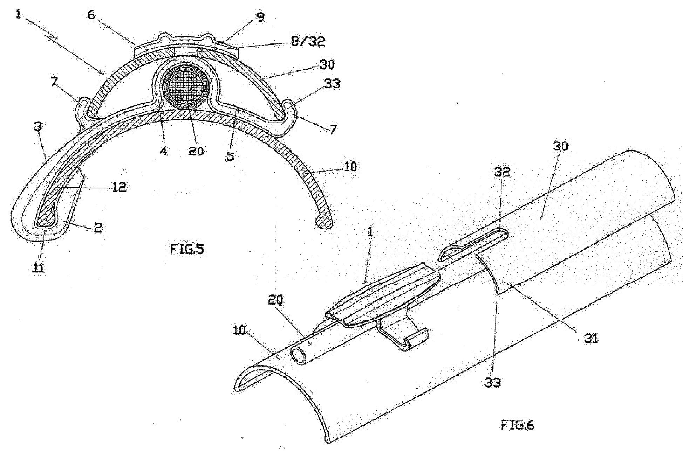

- fig. 5 (table III) represents a front section view of the finding, carried out according to the lines V-V of fig. 1;
- fig. 6 represents an exploded view of fig. 1;

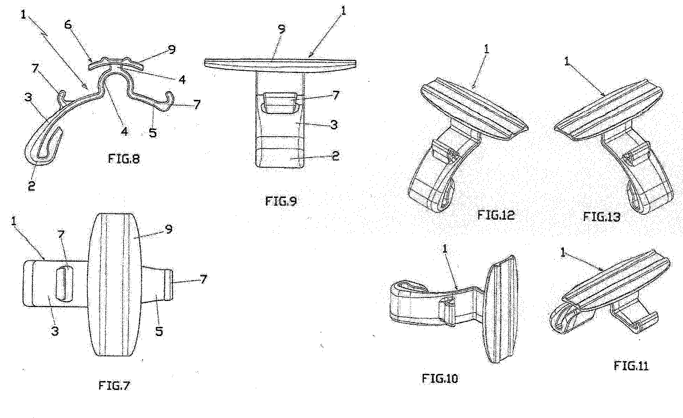

- figs. 7, 8, 9 (table IV) represent three orthogonal views of the finding;
- figs. 10 - 13 represents four perspective views of the finding.

With reference to the quoted figures, the fixing means, comprising a monoblock element 1, applied on the mudguard 10 to hold the cable 20, sliding longitudinally on the outer wall of said mudguard, consists of a jaw 2, shaped so as to be able to snap-engage in a removable manner on the edge 11 of the mudguard; said jaw 2 having a band 3 extending from it, in a perpendicular direction with respect to the longitudinal direction of the support mudguard 10, said band 3 extending in such a way as to match the shape of the outer surface 12 of the mudguard itself.

The band 3 is shaped to make an eyelet 4, present in a substantially intermediate position and at the apex of the convex profile of the mudguard; such a band extends beyond said eyelet 4 with an end portion 5, which always remains in contact, in forcibly deformed condition, with the outer surface 12 of the mudguard 10.

The present finding also provides for the use of a covering means 30 of the cable 20, which is connected and is held in a releasable manner on the monoblock element 1.

The novel characteristic with respect to known solutions consists of the particular configuration of the mutual fastening, which ensures a stable coupling between the monoblock element 1 and the covering means 30. Constructively, above the eyelet 4 a shaped projection 6 protrudes, shaped substantially like a "T" and on the band 3, two arched portions 7 project, arranged opposite and symmetrical with respect to the eyelet 4.

In this way, the fastening is made possible by the fact that the end portion 31 of the covering means 30 locks, through the recess 32, on the shank 8 of the projection 6.

Moreover, the aforementioned fastening is kept in action through the effect of the clamping force that is generated, as a consequence of a convex bending section of the end portion 31, in the following three points: centrally, in abutment against a head 9 of the projection 6 and laterally, in abutment against the two arched portions 7, which hold two corresponding ends 33 of said end portion 31, respectively.

Advantageously, the finding foresees that the longitudinal extension of the head 9 of the projection 6 is greater with respect to the width of its shank 8 and, above all, is substantially greater with respect to the width of the underlying band 3, so as to have a wide and prolonged contact surface with the end portion 31, to further increase the clamping force.

In particular, the aforementioned longitudinal extension of the head 9 is symmetrical with respect to the shank 8, so as to be able to securely fasten the covering means 30 on both sides of the monoblock element 1.

In practice, the finding fully achieves the preset purposes since:
- by fastening to a single side of the mudguard it is not dependent on the convex configuration, more or less arched and on the transverse dimensions of the mudguard itself;
- the circular eyelet surrounds almost the totality of the section of the cable that is thus well held;
- the configuration is substantially linear, so that its production through moulding of plastic material is particularly cost-effective.
- it can be applied in any position on the two sides of the mudguard;
- it is small in size and has a pleasant appearance;
- its symmetrical configuration allows it to be used for fastening to the two ends of the covering means.

The finding thus conceived can undergo variants and the materials used, as well as the size and the particular shapes thereof can be different, provided that it is all covered by the inventive concept defined by the following claims.

## Claims

1. MEANS FOR FIXING AN ELECTRIC CABLE ON A MUDGUARD OF A BICYCLE, MOTORCYCLE AND THE LIKE, said electric cable (20) being of the type usually positioned above a mudguard (10), being provided some holding means of the above-mentioned cable on an outer wall of the mudguard, said fixing means being **characterised in that** they comprise a monoblock element (1), in the form of a simple-coupling clip, consisting of a jaw (2), suitable to lock without distinction on one of the two edges (11) of the mudguard (10); said jaw (2) proceeding with a band (3), shaped so as to make an eyelet (4), suitable to contain the electric cable (20) passing through it and that extends beyond said eyelet (4), taking a shape corresponding to the one of the outer surface (12) of the mudguard (10) and keeping in touch with the above-mentioned band.

2. MEANS, according to claim 1, **characterised in that** the band (3) discloses an elastically deformable structure so that, when the monoblock element (1) is applied on the edge (11) of the mudguard (10), said band (3) is in a greatly deformed condition, so that the elastic contrast force that is generated in such an operative condition keeps said band (3) in contact with the outer surface (12) of the mudguard (10), thus determining the locking also of the eyelet (4), which contains the through cable (20).

3. MEANS, according to claim 2, **characterised in that** the eyelet (4) is present in intermediate position on the band (3) seen in diagonal section beside its major longitudinal extension and is arranged at the apex of the convex profile of the mudguard (10).

4. MEANS, according to claim 2, **characterised in that** an end portion (5) of the band (3) always remains in contact with the outer surface (12) of the mudguard (10), in the forced deformation condition.

5. MEANS, according to one or more of the previous claims, **characterised in that** above the eyelet (4) a shaped projection (6) protrudes, shaped substantially like a "T".

6. MEANS, according to one or more of the previous claims, **characterised in that** on the band (3) two arched portions (7) project, arranged opposite and symmetrical with respect to the eyelet (4).

7. MEANS, according to one or more of the previous claims, where the monoblock element (1) is longitudinally covered with covering means (30), **characterised in that** the fastening between the monoblock element (1) and its covering means (30) is made possible thanks to the fact that an end portion (31) of the covering means (30) locks, through a recess (32), on a shank (8) of the projection (6).

8. MEANS, according to the claims 6 and 7, **characterised in that** the fastening is obtained through the effect of the clamping force that is generated, as a consequence of a convex bending section of the end portion (31), in the following three points: centrally, in abutment against a head (9) of the projection (6) and laterally, in abutment against the two arched portions (7), which hold two corresponding ends (33) of said end portion (31).

9. MEANS, according to the claim 8, **characterised in that** the longitudinal extension of the head (9) of the projection (6) is greater than the width of its underlying shank (8).

10. MEANS, according to one or more of the previous claims, **characterised in that** the longitudinal extension of the head (9) of the projection (6) is substantially greater than the width of the underlying band (3).
